Europäisches Patentamt

European Patent Office

Office européen des brevets

(19)

(11) Publication number: **0 140 608**
**B1**

(12) **EUROPEAN PATENT SPECIFICATION**

(45) Date of publication of patent specification: **08.04.87**

(51) Int. Cl.$^4$: **B 01 J 29/06, C 10 G 47/16**

(21) Application number: **84306858.6**

(22) Date of filing: **09.10.84**

(54) Catalyst and process for hydrocracking and dewaxing hydrocarbon oils.

(30) Priority: **13.10.83 US 541763**
**13.10.83 US 541764**

(43) Date of publication of application:
**08.05.85 Bulletin 85/19**

(45) Publication of the grant of the patent:
**08.04.87 Bulletin 87/15**

(84) Designated Contracting States:
**BE DE FR GB IT NL**

(56) References cited:
**EP-A-0 094 827**
**EP-A-0 101 177**
**US-A-3 758 402**
**US-A-3 923 641**

(73) Proprietor: **MOBIL OIL CORPORATION**
**150 East 42nd Street**
**New York New York 10017 (US)**

(72) Inventor: **Oleck, Stephen Michael**
**241 Williams Avenue**
**Moorestown New Jersey 08057 (US)**
Inventor: **Wilson, Robert Currin, Jr.**
**138 North Bayard Avenue**
**Woodbury New Jersey 08096 (US)**

(74) Representative: **Cooper, John Anthony et al**
**Mobil Court 3 Clements Inn**
**London WC2A 2EB (GB)**

Courier Press, Leamington Spa, England.

**Description**

This invention relates to a catalyst and process for simultaneously hydrocracking and hydrodewaxing hydrocarbon oils to produce low pour point distillates and heavy fuels.

The catalytic dewaxing of hydrocarbon oils to reduce the temperature at which separation of waxy hydrocarbons occurs, is a known process. One process of this type is described in *The Oil and Gas Journal* dated January 6, 1975, on pages 69—72. Also U.S. Patents 3,668,113 and 3,894,938 describe processes involving dewaxing followed by hydrofinishing.

U.S. Patent Re 28,398 describes a process for catalytic dewaxing with a catalyst comprising a zeolite of the ZSM-5 type. A hydrogenation/dehydrogenation component may also be present. A process for hydrodewaxing a gas oil with a ZSM-5 type catalyst is described in U.S. Patent 3,956,102. A mordenite catalyst containing a Group VI or a Group VIII metal is used to dewax a low V.I. distillate from a waxy crude in a process described in U.S. Patent 4,110,056. U.S. Patent 3,755,138 describes a process for mild solvent dewaxing to remove high quality wax from a lube stock, which is then catalytically dewaxed to specification pour point. U.S. Patent 3,923,641 describes a process for hydrocracking naphthas using zeolite beta as a catalyst. U.S. Patent 3,758,402 describes a process for hydrocracking using a catalyst mixture comprising hydrogenation components, a large pore size zeolite such as zeolite X or Y and a smaller pore size zeolite of the ZSM-5 type. European Patent Application 0,094,827 (published 23 November 1983) describes a process for simultaneously hydrocracking and dewaxing hydrocarbon oils using a catalyst comprising zeolite beta composited with a metal hydrogenation component.

Hydrocracking is a well-known process and various zeolite catalysts have been employed in hydrocracking processes. Although those catalysts may be effective in providing distillate products having one or more properties consistent with the intended use of the distillate, those catalysts have, in general, suffered the disadvantage of not providing products having good low temperature fluidity characteristics, especially reduced pour point and viscosity. The catalysts used for hydrocracking comprise, in general terms, an acid component and a hydrogenation component. The hydrogenation component may be a noble metal such as platinum or palladium, or a non-noble metal such as nickel, molybdenum or tungsten or a combination of any two or more such metals. The acidic cracking component may be an amorphous material such as an acidic clay or amorphous silica-alumina or, alternatively, a crystalline zeolite material. Large pore zeolites such as zeolites X or Y have been conventionally used for this purpose because the principal components of the feedstocks (gas oils, coker bottoms, reduced crudes, recycle oils, FCC bottoms) are higher molecular weight hydrocarbons which will not enter the internal pore structure of the smaller pore zeolites and therefore will not undergo conversion. Hence, if a waxy feedstock such as Amal Gas Oil is hydrocracked with a large pore zeolite such as zeolite Y in combination with a hydrogenation component, the viscosity of the oil is reduced by cracking most of the 340°C+ material into material that boils at 165 to 340°C. The remainder of the 340°C+ material that is not converted contains the majority of the paraffinic components in the feedstock because the aromatics are converted preferentially to the paraffins. The unconverted 340°C+ material therefore retains a high pour point so that the final product will also have a relatively high pour point of about 10°C. Thus, although the viscosity is reduced, the pour point is still unacceptable. Even if the conditions are adjusted to give complete or nearly complete conversion, the higher molecular weight hydrocarbons which are present in the feedstock, principally polycyclic aromatics, will be subjected to cracking so as to lead to further reductions in the viscosity of the product. The cracked products, however, will include a substantial proportion of straight chain components (n-paraffins) which, if they are of sufficiently high molecular weight themselves, as they often are, will constitute a waxy component in the product. The final product may therefore be proportionately more waxy than the feedstock and, consequently, may have a pour point which is equally unsatisfactory or even more so. A further disadvantage of operating under high conversion conditions is that the consumption of hydrogen is increased. Attempts to reduce the molecular weight of these straight chain paraffinic products will only serve to produce very high fractions, for example propane, thereby decreasing the desired liquid yield.

In dewaxing processes, on the other hand, a shape selective zeolite such as ZSM-5 is used as the acidic component of the catalyst and the normal and slightly branched chain paraffins which are present in the feedstock will be able to enter the internal pore structure of the zeolite so that they will undergo conversion. The major proportion — typically about 70 percent of the feedstock — boiling above 340°C will remain unconverted because the bulky aromatic components, especially the polycyclic aromatics, are unable to enter the zeolite. The paraffinic waxy components will therefore be removed so as to lower the pour point of the product but the other components will remain so that the final product will have an unacceptably high viscosity even though the pour point may be satisfactory.

The present invention is based on the observation that heavy hydrocarbon oils may be simultaneously hydrocracked and hydrodewaxed to produce a liquid product of satisfactory pour point and viscosity by the use of a catalyst composition comprising zeolite beta, a large-pore zeolite such as rare earth exchanged zeolite X or Y, and a hydrogenation component to induce hydrogenation reactions.

The present invention therefore provides a catalyst for hydrodewaxing and hydrocracking a hydrocarbon fraction, comprising a mixture of

(a) one or more zeolites selected from zeolite X, zeolite Y, the acid form of zeolite Y and natural and other synthetic faujasites;

2

(b) zeolite beta; and

(c) a hydrogenation metal.

The present invention also provides a process for hydrodewaxing and hydrocracking a hydrocarbon fraction which comprises contacting the hydrocarbon fraction at a temperature of 230 to 500°C, a pressure of 790 to 20800 kPa and an LHSV of 0.1 to 20 with hydrogen at a hydrogen to hydrocarbon ratio of 18 to 3500 NlH$_2$/l and with a catalyst as described above.

In the process of the invention, the hydrocarbon feedstock is heated with the catalyst under conditions which are appropriate for hydrocracking. During the conversion, the aromatics and naphthenes which are present in the feedstock undergo hydrocracking reactions such as dealkylation, ring opening and cracking, followed by hydrogenation. The long chain paraffins which are present in the feedstock, together with the paraffins produced by the hydrocracking of the aromatics are, in addition, converted into products which are less waxy than the straight chain n-paraffins, thereby effecting a simultaneous dewaxing.

The process enables heavy feedstocks such as gas oils boiling above 340°C to be converted into distillate range products boiling below 340°C. Use of the catalyst of the invention results in much higher hydrocracking activity, about the same or higher dewaxing activity, about the same distillate selectivity at high (70 percent) conversion and, surprisingly, better selectivity at very high (76 percent) conversion compared to similar catalysts containing only zeolite beta.

The process of the invention combines elements of both hydrocracking and dewaxing. The catalyst used in this process comprises zeolite beta and a zeolite such as rare earth exchanged zeolite X or Y, ultra-stable zeolite Y, the acid form of zeolite Y, or other natural or synthetic faujasite, and a hydrogenation component which may be conventional in nature.

Zeolite beta is a crystalline aluminosilicate zeolite having a pore size greater than 5 Angstroms (0.5 nm). The composition of the zeolite (as described in U.S. Patents 3,303,069 and Re 28,341), in its as-synthesized form, may be expressed as follows:

$$[XNa(1.0 \pm 0.1 - X)TEA]AlO_2.YSiO_2.WH_2O$$

in which X is less than 1, preferably less than 0.7; TEA represents the tetraethylammonium ion; Y is greater than 5 but less than 100 and W is up to about 60 (it has been found that the degree of hydration may be higher than originally determined, where W was defined as being up to 4), depending on the degree of hydration and the metal cation present. The TEA component is calculated by differences from the analyzed value of sodium and the theoretical cation-to-structural aluminum ratio of unity.

In the fully base-exchanged form, beta has the composition:

$$[\tfrac{x}{n}M(1 \pm 0.1 - X)H].AlO_2.YSiO_2.WH_2O$$

in which X, Y and W have the values given above and n is the valence of the metal M.

In the partly base-exchanged form which is obtained from the initial sodium form of the zeolite by ion exchange without calcining, zeolite beta has the formula:

$$[\tfrac{x}{n}M(1 \pm 0.1 - X)TEA]AlO_2.YSiO_2.WH_2O$$

For use in the catalysts of the invention, zeolite beta is at least partly in the hydrogen form in order to provide the desired acidic functionality for the cracking reactions which are to take place. It is normally preferred to use the zeolite in a form which has sufficient acidic functionality to give it an alpha value of 1 or more (the alpha value, a measure of zeolite acidic functionality, is described, together with details of its measurement in U.S. Patent No. 4,016,218 and in J. Catalysis, Vol. *VI*, pages 278—287 (1966)). The acidic functionality may be controlled by base exchange of the zeolite, especially with alkali metal cations such as sodium, by steaming or by control of the silica:alumina ratio of the zeolite.

When synthesized in the alkali metal form, zeolite beta may be converted into the hydrogen form by way of the intermediate ammonium form as a result of ammonium ion exchange and calcination of the ammonium form to yield the hydrogen form. In addition to the hydrogen form, other forms of the zeolite in which the original amount of allaki metal has been reduced, may be used. Thus, the original alkali metal of the zeolite may be replaced by ion exchange with other suitable metal cations including, for example, nickel, copper, zinc, palladium, calcium and rare earth metals.

Zeolite beta, in addition to having the composition set out above, may be characterized by its X-ray diffraction data which are set out in U.S. Patents 3,308,069 and Re 28,341. The significant d values (in Angstroms: 1 Angstrom = 0.1 nm; radiation: K alpha doublet of copper; Geiger counter spectrometer) are as shown in Table 1 below:

TABLE 1

d values of Reflections in Zeolite Beta

| |
|---|
| 11.40 + 0.2 |
| 7.40 + 0.2 |
| 6.70 + 0.2 |
| 4.25 + 0.1 |
| 3.97 + 0.1 |
| 3.00 + 0.1 |
| 2.20 + 0.1 |

The preferred forms of zeolite beta for use in the present catalysts are the high silica forms, having a silica:alumina mole ratio of at least 10:1 and preferably form 20:1 to 50:1. It has been found, in fact, that zeolite beta may be prepared with silica:alumina mole ratios above the 100:1 maximum specified in U.S. Patents 3,308,069 and Re 28,341 and these forms of the zeolite perform well in the process. Ratios of 50:1, or even higher, for example 250:1 and 500:1, may therefore be used.

The silica:alumina ratios referred to herein are the structural or framework ratios, related to the ratio of the $SiO_4$ to the $AlO_4$ tetrahedra which together constitute the lattice structure of the zeolite. It should be understood that this ratio may vary from the silica:alumina ratio determined by various physical and chemical methods. For example, a gross chemical analysis may include aluminum which is present in the form of cations associated with the acidic sites on the zeolite, thereby giving a low silica:alumina ratio. Similarly, if the ratio is determined by the thermogravimetric analysis (TGA) of ammonia desorption, a low ammonia titration may be obtained if cationic aluminum prevents exchange of the ammonium ions onto the acidic sites. These disparities are particularly troublesome when certain treatments such as the dealuminization method described below (which result in the presence of ionic aluminum free of the zeolite structure) are employed. Due care should therefore be taken to ensure that the framework silica:alumina ratio is correctly determined.

The silica:alumina ratio of the zeolite may be determined by the nature of the starting materials used in its preparation and their quantities relative one to another. Some variation in the ratio may therefore be obtained by changing the relative concentration of the silica precursor relative to the alumina precursor but definite limits in the maximum obtainable silica:alumina ratio of the zeolite may be observed. For zeolite beta this limit is usually about 100:1 (although higher ratios may be obtained) and for ratios above this value, other methods are usually necessary for preparing the desired high silica zeolite. One such method comprises dealumination by extraction with acid and this method is described in European Patent Application 0,095,304 (published 30 November 1983).

Briefly, that method comprises contacting the zeolite with an acid, preferably a mineral acid such as hydrochloric acid. The dealuminization proceeds readily at ambient and mildly elevated temperatures and occurs with minimal losses in crystallinity, to form high silica forms of zeolite beta with silica:alumina ratios of at least 100:1, with ratios of 200:1 or even higher being readily attainable.

The zeolite is conveniently used in the hydrogen form for the dealuminization process although other cationic forms may also be employed, for example, the sodium form. If these other forms are used, sufficient acid should be employed to allow for the replacement by protons of the original cations in the zeolite. The amount of zeolite in the zeolite/acid mixture should generally be from 5 to 60 percent by weight.

The acid may be an inorganic acid or an organic acid. Typical inorganic acids that may be employed include mineral acids such as hydrochloric, sulfuric, nitric and phosphoric acids, peroxydisulfonic acid, dithionic acid, sulfamic acid, peroxymonosulfuric acid, amidosulfonic acid, nitrosulfonic acid, chlorosulfuric acid, pyrosulfuric acid, and nitrous acid. Representative organic acids that may be used include formic acid, trichloroacetic acid, and trifluoroacetic acid.

The concentration of added acid should be such as not to lower the pH of the reaction mixture to an undesirably low level which could affect the crystallinity of the zeolite undergoing treatment. The acidity which the zeolite can tolerate will depend, at least in part, upon the silica/amlumina ratio of the starting material. Generally, it has been found that zeolite beta can withstand concentrated acid without undue loss in crystallinity but as a general guide, the acid will be from 0.1 N to 4.0 N, usually 1 to 2 N. These values hold good regardless of the silica:alumina ratio of the zeolite beta starting material. Stronger acids tend to effect a relatively greater degree of aluminum removal than weaker acids.

The dealuminization reaction proceeds readily at ambient temperatures but mildly elevated temperatures may be employed, for example, up to boiling. The duration of the extraction will affect the silica:alumina ratio of the product since extraction, being diffusion controlled, is time dependent. However, because the zeolite becomes progressively more resistant to loss of crystallinity as the silica:alumina ratio increases, i.e., it becomes more stable as the aluminum is removed, higher temperatures and more concentrated acids may be used towards the end of the treatment than at the beginning without the attendant risk of losing crystallinity.

After the extraction treatment, the product is water-washed free of impurities, preferably with distilled water, until the effluent wash water has a pH within the approximate range of 5 to 8.

**0 140 608**

The crystalline dealuminized products obtained by that method have substantially the same crystallographic structure as that of the starting aluminosilicate zeolite but with increased silica:alumina ratios. The formula of the dealuminized zeolite beta will therefore be

$$[\tfrac{x}{n}M(1 \pm 0.1-X)H]AlO_2.YSiO_2.WH_2O$$

in which X is less than 1, preferably less than 0.75, Y is at least 100, preferably at least 150 and W is up to 60. M is a metal, preferably a transition metal or a metal of Groups 1A, 2A or 3A, or a mixture of such metals. The silica:alumina ratio, Y, will generally be in the range of 100:1 to 500:1. The X-ray diffraction pattern of the dealuminized zeolite will be substantially the same as that of the original zeolite, as set out in Table 1 above.

If desired, the zeolite may be steamed prior to acid extraction so as to increase the silica:alumina ratio and render the zeolite structure more stable to the acid. The steaming may also serve to increase the ease with which the alumina is removed and to promote the retention of crystallinity during the extraction procedure. Steaming itself may be sufficient to increase the silica:alumina ratio.

The catalyst composition of the invention contains in addition to zeolite beta, a hydrogenating component which is suitably derived from a metal of Groups VIA and VIII of the Periodic Table (the Periodic Table being that approved by IUPAC and the U.S. National Bureau of Standards and published, for example, by the Fisher Scientific Company, Catalog No. 5—702—10). Preferred non-noble metals are tungsten, molybdenum, nickel, cobalt, and chromium, and the preferred noble metals are platinum, palladium, iridium and rhodium. Combinations of non-noble metals selected from nickel, cobalt, molybdenum and tungsten are exceptionally useful with many feedstocks. The amount of hydrogenation component is not narrowly critical and can vary from about 0.01 to about 30 weight %, based on the total catalyst. It is to be understood that the non-noble metal combinations may be in the oxide or sulfide form. The hydrogenation component can be exchanged into either the zeolite beta or the other (X or Y) zeolite, or both, impregnated onto them or physically mixed with them. If the metal is impregnated onto or exchanged into the zeolite, this may be achieved, for example, by treating the zeolite with a platinum metal-containing ion. Suitable platinum compounds include chloroplatinic acid, platinous chloride and various compounds containing the platinum amine complex. The hydrogenation component can also be present in any matrix material used to bind the zeolite components.

The catalyst may be treated by conventional pre-sulfiding treatments, e.g., by heating in the presence of hydrogen sulfide, to convert oxide forms of the metals such as CoO or NiO to their corresponding sulfides.

The metal compounds may be either compounds in which the metal is present in the cation of the compound or compounds in which it is present in the anion of the compound. Both types of compounds can be used. Platinum compounds in which the metal is in the form of a cation or cationic complex, for example $Pt(NH_3)_4Cl_2$, are particularly useful, as are anionic complexes such as the metatungstate ion. Cationic forms of other metals are also very useful since they may be exchanged onto the zeolite or impregnated into it.

Prior to use the zeolite should be at least partially dehydrated. This can be achieved by heating to a temperature of 200 to 600°C in air or an inert atmosphere such as nitrogen for 1 to 48 hours. Dehydration can also be carried out at lower temperatures merely by using a vacuum, but a longer time is required to obtain a sufficient amount of dehydration.

The X or Y zeolite or other faujasite material used in the catalysts of the invention suitably has the original cations associated therewith replaced by any one or more of a wide variety of other cations according to techniques well known in the art. Typical replacing cations include hydrogen, ammonium and metal cations and mixtures thereof. Of these cations, particular preference is given to cations of ammonium, hydrogen, rare earths, Mg, Zn, Ca, and mixtures thereof. Particularly preferred is rare earth-exchanged zeolite Y.

Typical ion exchange techniques involve contacting the particular zeolite with a solution of a salt of the desired cation or cations. Although a wide variety of salts can be employed, particular preference is given to chlorides, nitrates and sulfates.

A preferred zeolite which may be used is the ultrastable zeolite Y. The ultrastable zeolites are well known in the art. For example, they are described at pages 507—522, and pages 527—528 of the book *Zeolite Molecular Sieves* by Donald W. Breck, John Wiley & Sons, Inc. 1974 and are exemplified in U.S. Patents 3,293,192 and 3,449,070. These low sodium, ultra-stable zeolites are available commercially from W. R. Grace & Company.

In formulating the catalysts of the invention, it may be desirable to incorporate the zeolites into a material resistant to the temperature and other conditions employed in the process of the invention. Such matrix materials include synthetic and naturally occurring substances such as inorganic materials, for example clay, silica and metal oxides. The latter may be either naturally occurring or in the form of gelatinous precipitates or gels including mixtures of silica and metal oxides. Naturally occurring clays that can be composited with the zeolites include those of the montmorillonite and kaolin families. The clays can be used in the raw state as originally mined or initially subjected to calcination, acid treatment or chemical modification.

5

The zeolites may suitably be composited with a porous matrix material, for example alumina, silica-alumina, silica-magnesia, silica-zirconia, silica-thoria, silica-berylia, silica-titania, and ternary compositions, such as silica-alumina-thoria, silica-alumia-zirconia, and silica-magnesia-zirconia. The matrix may be in the form of a co-gel. The relative proportions of zeolite component and inorganic oxide gel matrix on an anhydrous basis may vary widely with the zeolite content ranging from 10 to 99, more usually 25 to 80, percent by weight of the dry composite. The matrix itself may possess catalytic properties, generally of an acidic nature and may be impregnated with the hydrogenation metal component.

The particular proportion of one zeolite component to the other in the catalyst is not narrowly critical and can vary over a wide range. However, for most purposes, the weight ratio of the X or Y type zeolite to the beta zeolite is from 1:10 to 3:1, and preferably from 1:5 to 2:1 and more preferably from 1:4 to 1:1.

A preferred catalyst of the invention comprises a porous matrix together with the two types of zeolites described above. Such a catalyst therefore comprises a hydrogenation component, a zeolite of the beta type, and a zeolite of the X or Y type combined, dispersed or otherwise intimately mixed with a porous matrix in such proportions that the resulting product contains from 1% to 95% by weight and preferably from 10 to 70% by weight of the zeolites.

The feedstock for the process of the invention comprises a heavy hydrocarbon oil such as a gas oil, coker tower bottoms fraction reduced crude, vacuum tower bottoms fraction, deasphalted vacuum resid, FCC tower bottoms fraction or cycle oil. Oils derived from coal, shale and tar sands may also be treated in this way. Oils of this kind generally boil above 340°C although the process is also useful with oils which have initial boiling points as low as 260°C. These heavy oils comprise high molecular weight long chain paraffins and high molecular weight aromatics with a large proportion of fused ring aromatics. The heavy hydrocarbon oil feedstock will normally. contain a substantial amount boiling above 230°C and will normally have an initial boiling point of about 285°C, more usually about 340°C. Typical boiling ranges will be about 340 to 565°C or about 340 to 510°C but oils with a narrower boiling range may, of course, be processed, for example, those with a boiling range of about 340 to 450°C. Heavy gas oils are often of this kind as are cycle oils and other non-residual materials. It is possible to co-process materials boiling below 260°C but the degree of conversion will be lower for such components. Feedstocks containing lighter ends of this kind will normally have an initial boiling point above about 150°C.

The process of the invention is of particular utility with highly paraffinic feeds because, with feeds of this kind, the greatest improvement in pour point may be obtained. However, most feeds will contain a certain content of polycyclic aromatics.

The process of the invention is carried out under conditions similar to those used for conventional hydrocracking although the use of a highly siliceous zeolite catalyst permits the total pressure requirements to be reduced. Process temperatures of 230 to 500°C may conveniently be used although temperatures above 425°C will normally not be employed as the thermodynamics of the hydrocracking reactions become unfavorable at temperatures above this point. Generally, temperatures of 300 to 425°C will be employed. Total pressure is usually from 790 to 20800 kPa and the higher pressures within this range (over 7000 kPa) will normally be preferred. The process is operated in the presence of hydrogen and hydrogen partial pressures will normally be 16000 kPa or less. The ratio of hydrogen to the hydrocarbon feedstock (hydrogen circulation rate) will normally be from 18 to 3500 normal liters of hydrogen per liter of feedstock. The space velocity of the feedstock will normally be from 0.1 to 20 LHSV, preferably 0.1 to 10 LHSV. At low conversions, the n-paraffins in the feedstock will be converted in preference to the iso-paraffins but at higher conversions under more severe conditions the iso-paraffins will also be converted. The product is low in fractions boiling below 150°C and in most cases the product will have a boiling range of about 150 to 340°C.

The process may be carried out by contacting the feedstock with a fixed stationary bed of catalyst, a fixed fluidized bed or with a transport bed. A simple configuration is a trickle-bed operation in which the feed is allowed to trickle through a stationary fixed bed of catalyst. With such a configuration, it is desirable to initiate the reaction with fresh catalyst at a moderate temperature which is of course raised as the catalyst ages, in order to maintain catalytic activity. The catalyst may be regenerated by contact at elevated temperature with hydrogen gas, for example, or by burning in air or other oxygen-containing gas.

A preliminary hydrotreating step to remove nitrogen and sulfur and to saturate aromatics to naphthenes without substantial boiling range conversion of the feedstock will usually improve catalyst performance and permit lower temperaturs, higher space velocities, lower pressures or combinations of such conditions to be employed.

The following Example illustrates the invention. All parts, proportions and percentages in the Example are by weight uless stated to the contrary.

## 0 140 608

### Example

Three catalysts compositions were prepared in extruded form having the following proportion of components by weight.

| Catalyst: | A | B | C |
|---|---|---|---|
| Na zeolite-beta | 50 | 50 | 75 |
| Rare Earth Exchanged Zeolite V (REY)* | 0 | 15 | 0 |
| Alumina | 50 | 35 | 25 |

*Contained 14.6 wt.% $Re_2O_3^-$ and 2.2 wt.% Na.

These compositions were calcined at 540°C and exchanged to a low sodium content with an ammonium nitrate solution and recalcined at 540°C. The three compositions were then impregnated to a concentration of 4% nickel and 10% tungsten using nickel nitrate and ammonium metatungstate solution. Catalyst B is in accordance with the invention; catalyst A is in accordance with European Patent Application 0,094,827; and catalyst C corresponds to catalyst A but in which the zeolite beta content exceeds the total zeolite content of catalyst B.

A suitable feedstock was prepared by hydrotreating a 410—565°C vacuum gas oil over a commercial nickel/molybdenum-on-alumina hydrotreating catalyst at a liquid hourly space velocity of 2 and a pressure of 8720 kPa. The hydrotreated product was then fractionated to obtain a 340°C+ bottoms product for use as a charge stock in evaluating the catalyst compositions described above. The catalysts were presulfided by being contacted with a 2% $H_2S/H_2$ mixture. Portions of the feedstock prepared as described above were then passed over samples of catalysts A and B in a down-flow fixed-bed unit at a liquid hourly space velocity of 1 and a pressure of 7000 kPa.

Product yields at about 70% conversion of the 340°C+ feedstock compare as follows:

| Catalyst: | A | B |
|---|---|---|
| Conversion, % | 71 | 70 |
| Yields, % | | |
| $C_1$—$C_4$ | 9.6 | 9.1 |
| $C_5$—165°C Naphtha | 31.2 | 31.9 |
| 165—340°C Distillate | 31.2 | 29.6 |
| 340—410°C Distillate | 16.2 | 15.1 |
| 410°C+ | 12.8 | 14.9 |

This shows distillate selectivity is about the same for both catalysts at normal conversion levels.

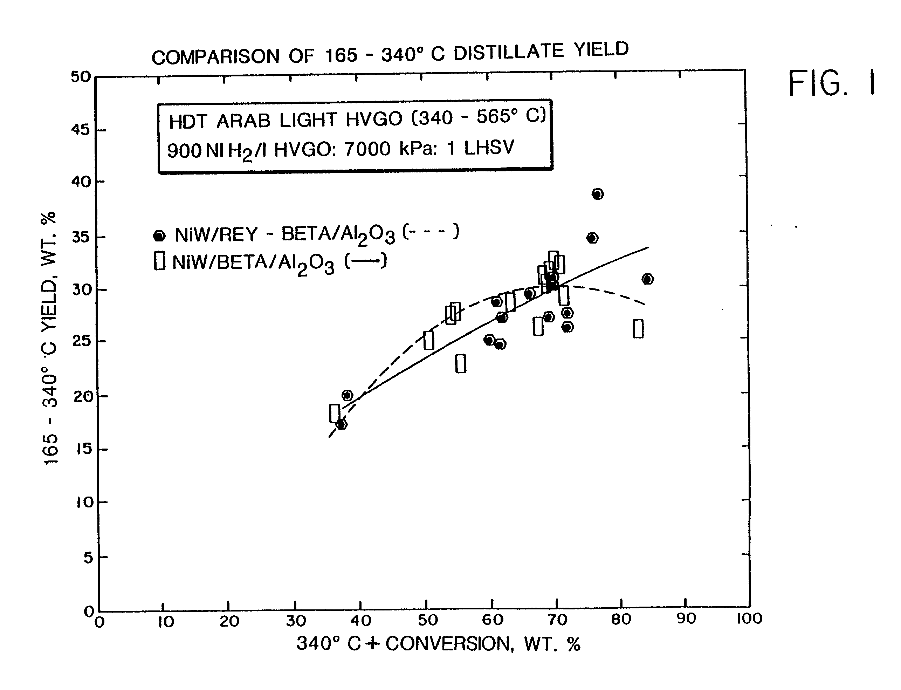

Figure 1 compares 165—340°C distillate yields for catalysts A and B. This shows that above 70% conversion, catalyst B (15% REY) produces more 165—340°C distillate than catalyst A (0% REY).

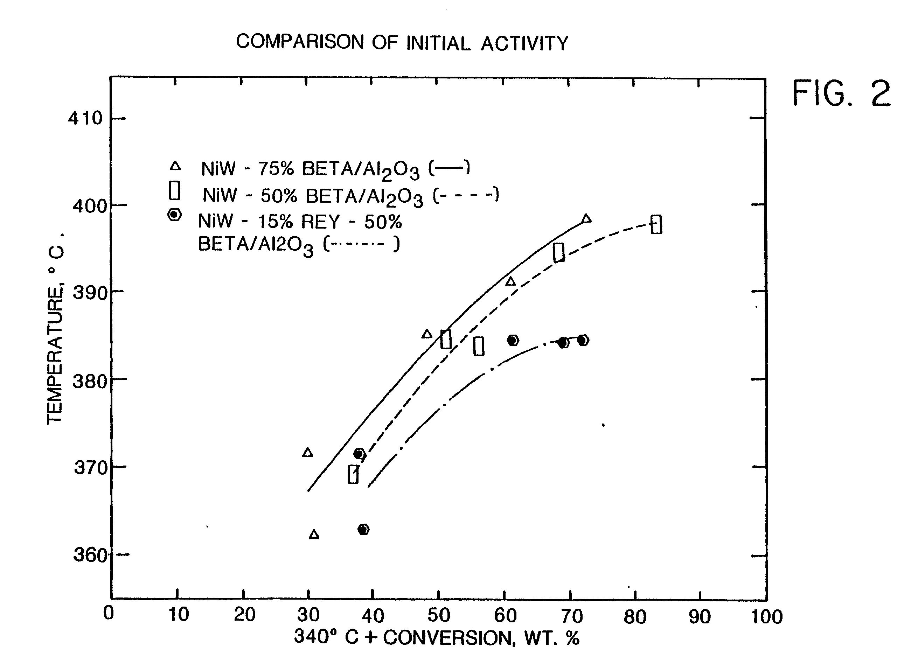

Figure 2 compares the activity of the three catalysts A, B and C. It is readily apparent that the catalyst B of the invention is more active than catalyst A or catalyst C, particularly at corresponding temperatures. It is also readily apparent that increasing the fraction of zeolite beta as in catalyst C does not result in a corresponding increase in activity in comparison to catalyst B. It is only through the addition of the zeolite Y (rare earth exchanged) that an increase in activity is obtained.

The properties of the 165°C+ fractions were as follows:

7

| Catalyst: | A | B |
|---|---|---|
| 165—340°C Distillate | | |
| Pour Point, °C | −54 | −54 |
| Sulfur, ppm | 20 | 20 |
| Nitrogen, ppm | 1 | 1 |
| Diesel Index | 45 | 43 |
| 340—410°C Distillate | | |
| Pour point, °C | −12 − | −18 − |
| Sulfur, ppm | 20 | 20 |
| Nitrogen, ppm | 9 | 8 |
| Diesel Index | 54 | 53 |
| 410°C+ | | |
| Pour Point, °C | −29 | −34 |
| Sulfur, ppm | 60 | 50 |
| Nitrogen, ppm | 27 | 10 |

The above data show that the addition of 15% rare earth exchanged zeolite Y has no adverse effect on the quality of the products obtained.

The process and catalyst of this invention provide the advantages of permitting production of a hydrocarbon fraction of low sulfur and low pour point that is immediately available for blending into commercial products. The length of a process cycle is increased because lower temperaturs can be used at the beginning of the cycle thus slowing the carbonization and other deterioration of the catalyst. Selectivity to the production of distillate is enhanced as is the dewaxing function of the catalyst.

**Claims**

1. A catalyst for hydrodewaxing and hydrocracking a hydrocarbon fraction, comprising a mixture of
   (a) one or more zeolites selected from zeolite X, zeolite Y, the acid form of zeolite Y and natural and other synthetic faujasites;
   (b) zeolite beta; and
   (c) a hydrogenation metal.

2. A catalyst according to claim 1, containing from 5 to 20% of (a) based on the total weight of (a), (b) and (c).

3. A catalyst according to claim 1 or claim 2, containing from 20 to 60% of (b) based on the total weight of (a), (b) and (c).

4. A catalyst according to any one of claims 1 to 3, containing from 0.1 to 30% of (c) based on the total weight of (a), (b) and (c).

5. A catalyst according to any one of claims 1 to 4, wherein component (a) is zeolite Y.

6. A catalyst according to claim 5, wherein component (a) is ultrastable zeolite Y.

7. A catalyst according to claim 5 or claim 6, wherein component (a) is rare eacth exchanged zeolite Y.

8. A catalyst according to any one of claims 1 to 7, wherein component (b) is zeolite beta having a silica:alumina mole ratio of 10—500.

9. A catalyst according to claim 8, wherein the zeolite beta has a silica:alumina mole ratio of 20—50.

10. A catalyst according to any one of claims 1 to 9, wherein component (c) is one or more metals from Groups VIA and VIII of the Periodic Table.

11. A catalyst according to claim 10, wherein component (c) is tungsten, molybdenum, nickel, cobalt, chromium or an oxide or sulfide thereof, or platinum, palladium, iridium or rhodium, or a mixture of any two or more thereof.

8

12. A catalyst according to any one of claims 1 to 11, which also comprises a porous matrix material.

13. A process for hydrodewaxing and hydrocracking a hydrocarbon fraction which comprises contacting the hydrocarbon fraction at a temperature of 230 to 500°C, a pressure of 790 to 20800 kPa and an LHSV of 0.1 to 20 with hydrogen at a hydrogen to hydrocarbon ratio of 18 to 3500 NIH$_2$/l and with a catalyst according to any one of claims 1 to 12.

## Patentansprüche

1. Katalysator zum Hydroentwachsen und Hydrocracken einer Kohlenwasserstofffraktion, der eine Mischung von

(a) einem oderen mehreren Zeolithen, ausgewählt aus Zeolith X, Zeolith Y, der Säureform von Zeolith Y und natürlichen oder anderen synthetischen Faujasiten,

(b) Zeolith Beta und

(c) einem Hydriermetall umfaßt.

2. Katalysator nach Anspruch 1, der von 5 bis 20% von (a) enthält, bezogen auf das Gesamtgewicht von (a), (b) und (c).

3. Katalysator nach Anspruch 1 oder 2, der von 20 bis 60 Gew.-% von (b) enthält, bezogen auf das Gesamtgewicht von (a), (b) und (c).

4. Katalysator nach einem der Ansprüche 1 bis 3, der von 0,1 bis 30 Gew.-% von (c) enthält, bezogen auf das Gesamtgewicht von (a), (b) und (c).

5. Katalysator nach einem der Ansprüche 1 bis 4, worin die Komponente (a) Zeolith Y ist.

6. Katalysator nach Anspruch 5, worin die Komponente (a) hochstabiler Zeolith Y ist.

7. Katalysator nach Anspruch 5 oder 6, worin die Komponente (a) ein mit Seltenen Erden ausgetauschter Zeolith Y ist.

8. Katalysator nach einem der Ansprüche 1 bis 7, worin die Komponente (b) Zeolith Beta mit einem Siliciumdioxid/Aluminiumoxid-Molverhältnis von 10—500 ist.

9. Katalysator nach Anspruch 8, worin der Zeolith Beta ein Siliciumdioxid/Aluminiumoxid-Molverhältnis von 20—50 aufweist.

10. Katalysator nach einem der Ansprüche 1 bis 9, worin die Komponente (c) ein oder mehrere der Metalle der Gruppen VIA und VIII des Periodensystems ist.

11. Katalysator nach Anspruch 10, worin die Komponente (c) Wolfram, Molybdän, Nickel, Kobalt, Chrom oder ein Oxid oder Sulfid davon, oder Platin, Palladium, Iridium oder Rhodium, oder eine Mischung von zwei oder mehreren davon ist.

12. Katalysator nach einem der Ansprüche 1 bis 11, der ebenfalls ein poröses Matrixmaterial umfaßt.

13. Verfahren zum Hydroentwachsen und Hydrocracken einer Kohlenwasserstofffraktion, bei dem die Kohlenwasserstofffraktion bei einer Temperatur von 230 bis 500°C, einem Druck von 790 bis 20800 kPa und einer LHSV von 0,1 bis 20 mit Wasserstoff bei einem Verhältnis von Wasserstoff zu Kohlenwasserstoff von 18:3500 NlH$_2$/l und mit einem Katalysator nach einem der Ansprüche 1 bis 12 in Kontakt gebracht wird.

## Revendications

1. Un catalyseur d'hydrodéparaffinage et d'hydrocraquage d'une fraction d'hydrocarbures, comprenant un mélange de:

(a) une ou plusiers zéolites choisies parmi la zéolite X, la zéolite Y, la forme acide de la zéolite Y et autres faujasites naturelles ou synthétique;

(b) la zéolite béta; et

(c) un métal d'hydrogénation.

2. Un catalyseur selon la revendication 1 contenant entre 5 et 20% de (a) par rapport au poids total de (a), (b) et (c).

3. Un catalyseur selon la revendication 1 ou la revendication 2, contenant entre 20 et 60% de (b) par rapport au poids total de (a), (b) et (c).

4. Un catalyseur selon l'une quelconque des revendications 1 à 3, contenant entre 0,1 et 30% de (c) par rapport au poids total de (a), (b) et (c).

5. Un catalyseur selon l'une quelconque des revendications 1 à 4, dans lequel le composant (a) est la zéolite Y.

6. Un catalyseur selon la revendication 5, dans lequel le composant (a) est une zéolite Y ultrastable.

7. Un catalyseur selon la revendication 5 ou 6, dans lequel le composant (a) est une zéolite Y échangée avec une terre rare.

8. Un catalyseur selon l'une quelconque des revendications 1 à 7, dans lequel le composant (b) est la zéolite béta dont le rapport molaire silice/alumine est de 10 à 500.

9. Un catalyseur selon la revendication 8, dans lequel la zéolite béta présente un rapport molaire silice/alumine de 20 à 50.

10. Un catalyseur selon l'une quelconque des revendications 1 à 9, dans lequel le composant (c) représente un ou plusieurs des métaux des groupes VIA et VIII de la Table Périodique.

11. Un catalyseur selon la revendication 10, dans lequel le composant (c) représente du tungstène, du molybdène, du nickel, du cobalt, du chrome ou un de leurs oxydes ou de leurs sulfures, ou du platine, du palladium, de l'iridium ou du rhodium, ou un mélange de deux ou plus de ceux-ci.

12. Un catalyseur selon l'une quelconque des revendications 1 à 11, qui comprend également une substance matrice poreuse.

13. Un procédé d'hydrogéparaffinage et d'hydrocraquage d'une fraction d'hydrocarbures qui comprend la mise au contact de la fraction d'hydrocarbures à une température de 230 à 500°C, une pression de 790 à 20 800 kPa et une vitesse spatiale horaire liquide de 0,1 à 20, avec de l'hydrogène, le raport hydrogène/hydrocarbure étant de 18 à 3 500 NlH$_2$/l et le catalyseur correspondant à l'une quelconque des revendications 1 à 12.

COMPARISON OF 165 - 340° C DISTILLATE YIELD

FIG. I

HDT ARAB LIGHT HVGO (340 - 565° C)
900 Nl $H_2$/l HVGO: 7000 kPa: 1 LHSV

● NiW/REY - BETA/$Al_2O_3$ (- - -)
▯ NiW/BETA/$Al_2O_3$ (——)

165 - 340° C YIELD, WT. %

340° C + CONVERSION, WT. %

0 140 608

COMPARISON OF INITIAL ACTIVITY

FIG. 2

Legend:
△  NiW - 75% BETA/$Al_2O_3$ (——)
▯  NiW - 50% BETA/$Al_2O_3$ (- - - -)
◉  NiW - 15% REY - 50% BETA/Al2O3 (—·—·—)

Y-axis: TEMPERATURE, °C. (360, 370, 380, 390, 400, 410)

X-axis: 340° C + CONVERSION, WT. % (0, 10, 20, 30, 40, 50, 60, 70, 80, 90, 100)

0 140 608

2